# EUROPÄISCHE PATENTSCHRIFT

(11) **EP 1 520 871 B1**
(45) Veröffentlichungstag und Bekanntmachung des Hinweises auf die Patenterteilung: **08.07.2009**
(21) Anmeldenummer: 04023602.8
(22) Anmeldetag: 04.10.2004
(51) Int. Cl.: C08J 3/12, C08J 11/06

(54) **Granulat und Verfahren zu seiner Herstellung**
Granulate and process for the preparation thereof
Granulé et son procédé de préparation

(30) Priorität: 02.10.2003 DE 10345964; 02.10.2003 DE 20317731 U
(43) Veröffentlichungstag der Anmeldung: 06.04.2005
(73) Patentinhaber: Hans-Joachim, Weitzel GmbH & Co. KG, 25436 Tornesch (DE)
(72) Erfinder: Weitzel, Hans-Joachim, 25436 Tornesch (DE)
(74) Vertreter: Rupp, Christian

(56) Entgegenhaltungen:
- EP-A- 0 047 374
- EP-A- 1 416 009
- EP-A1- 1 486 613
- WO-A-01/72875
- WO-A-02/060290
- DE-A- 19 631 251
- DE-U- 20 217 142
- US-A- 5 714 263

## Beschreibung

Die vorliegende Erfindung betrifft ein Granulat gemäß Patenanspruch 1 und ein Verfahren zu seiner Herstellung nach Patentanspruch 9. Das Granulat eignet sich als Einstreumaterial für große Flächen, wie beispielsweise Kunstrasen und Spielflächen von Sporteinrichtungen und Spielplätzen.

Kunstrasen wird teilweise, je nach Belagstyp, mit einem elastischen Füllstoff in Form eines Einstreumaterials in loser Form verfüllt. Dabei wird das Einstreumaterial in die Polschicht des Kunstrasens eingestreut. Als elastischer Füllstoff sind Gummigranulate aus Altgummi oder für diesen Zweck hergestellte, teure EPDM-Granulate seit Jahren bekannt.

Diese werden zerkleinert zur Herstellung von Gummigranulaten bzw. Gummipartikeln, die unterschiedliche Formen mit entsprechend großer Oberfläche aufweisen. Es ist des weiteren bekannt, diese Gummigranulate bzw. Gummipartikel mit einem Bindemittel zu umhüllen. Gegebenenfalls kann dem Bindemittel ein Farbpigment zugegeben werden, so daß das Gummigranulat bzw. die Gummipartikel die für die Endverwendung geeignete Farbe aufweisen.

So sind aus der DE 202 17 142 U1 rieselfähige Gummipartikel bekannt, die einen Altgummikem enthalten und auf der kompletten Oberfläche eine dauerelastische Ummantelung, bestehend aus einem Bindemittel, aufweisen. Diese Ummantelung kann Farbpigmente und andere Additive, wie beispielsweise Kreide enthalten.

Aus der DE 43 40 478 A1 ist ein Verfahren zum Herstellen eines bahnförmigen Belagsstoffes aus einer verdichteten Mischung aus Gummiteilen bekannt. Diese verdichtete Mischung besteht aus einer bereits anreagierten Mischung aus zerkleinerten Gummiabfällen und/oder Gummigranulat aus Neu- oder Altgummi mit einem Polyurethan-Bindemittel und mineralischen Stoffen, wie Quarz, Sand, Quarzkies und Splitte. Diese Mischung wird in einen bahnförmigen Belag unter Verdichtung des Materials durch Druckwalzen mit folgender Erhärtung mittels einem Heizkanal verarbeitet.

Die WO 01/72875 A1 beschreibt ein Granulat, welches aus einem Kautschukkem besteht, um den eine erste Schicht aus einem thermoplastischen Bindemittel und eine zweite Schicht aus einem fasrigen Material gelagert ist. Die Fasern, die mit der Bindemittelschicht verankert sind, ragen in Form von Fusseln aus der Bindemittelschicht heraus. Als Bindemittel wird Polypropylen oder Polyethylen verwendet. Aufgrund der herausragenden Fusseln neigt das Granulat dazu zu verklumpen, so dass eine leichte Verteilung dieses Granulats nicht möglich ist.

Schließlich beschreibt die DE 39 37 799 A1 ein rieselfähiges Kautschukgranulat von thermoplastischen Elastomeren, das oberflächlich aufgebracht ein Silikat aufweist.

Die als Einstreugranulat verwendeten Gummigranulate aus Altgummi haben den Nachteil, den hohen Anforderungen der Umweltbehörden nicht gerecht zu werden. Es ist bekannt, daß diese Gummimischungen Schadstoffe, wie Schwermetalle, enthalten, die ausgewaschen werden können. Zu diesen Schadstoffen zählen beispielsweise Zink, Zinn, Cadmium, Chrom, Arsen und Quecksilber.

Ein weiterer Nachteil ist darin zu sehen, daß die bekannten ummantelten Gummipartikel oftmals dazu neigen, miteinander zu verkleben, was zur Folge hat, daß das Einstreugranulat nicht die erforderliche Rieselfähigkeit aufweist. Ein Verklumpen des Einstreumaterials kann in vielen Fällen dazu führen, daß die damit verfüllte Fläche, zum Beispiel ein Kunstrasenbelag, nicht begehbar bzw. bespielbar wird.

Es ist daher Aufgabe der vorliegenden Erfindung, ein preiswertes Granulat zur Einstreuung in eine Fläche zur Verfügung zu stellen, das eine Umweltbelastung deutlich mindert.

Es ist eine weitere Aufgabe der Erfindung, ein Granulat zur Verfügung zu stellen, das rieselfähig ist und damit ohne weiteres als rieselfähiger, loser Füllstoff in Form von Einstreugranulat zur Füllung von großen Flächen verwendet werden kann.

Es ist eine weitere Aufgabe der vorliegenden Erfindung, ein Granulat zur Verfügung zu stellen, das Feuchtigkeit speichert zur Verbesserung der sportfunktionellen Eigenschaften einer Kunststoffrasenfläche.

Eine andere Aufgabe der vorliegenden Erfindung besteht darin, ein Verfahren zur Verfügung zu stellen, mit dem das obige Granulat kostengünstig und ohne großen apparativen Aufwand hergestellt werden kann.

Die Aufgaben werden mit der vorliegenden Erfindung gelöst.

Die vorliegende Erfindung betrifft ein rieselfähiges Granulat, das als Kern ein zerkleinertes Gummimaterial und eine äußere Schicht aus einem Bindemittel und einem Material, das aus einem Faserfüllstoffmaterial oder einer Mischung aus einem Faserfüllstoffmaterial und einem mineralischen Material gewählt ist, umfasst, wobei das Bindemittel ein Polyurethan-Bindemittel und das Faserfüllstoffmaterial Polyethylen ist.

Die Unteransprüche definieren bevorzugte Ausführungsformen des erfindungsgemäßen Granulats.

Die Erfindung betrifft weiterhin ein Verfahren zur Herstellung eines rieselfähigen Granulats, das die Schritte aufweist:
- Vermischen eines zerkleinerten Gummimaterials und eines Polyurethan-Bindemittels in einer Mischvorrichtung für einen Zeitraum von 1 bis 10 Minuten;
- Zugabe eines Polyethylen-Faserfüllstoffmaterials oder einer Mischung aus einem Polyethylen-Faserfüllstoffmaterial und einem mineralischen Material unter weiterem Mischen für einen Zeitraum von 1 bis 10 Minuten;
- Abbinden des Polyurethan-Bindemittels unter Mischen für einen Zeitraum von 4 bis 20 Minuten und
- Entfernen des Granulats aus der Mischvorrichtung.

Die Unteransprüche betreffen bevorzugte Ausführungsformen des erfindungsgemäßen Verfahrens.

Das erfindungsgemäße rieselfähige Granulat sowie das nach dem erfindungsgemäßen Verfahren hergestellte Granulat ist als Einstreumaterial für große Flächen, wie beispielsweise Kunstrasen, Sporteinrichtungen und Spielplätze geeignet.

Das erfindungsgemäße Granulat kann vorteilhafterweise auf der äußeren Schicht eine weitere Schicht aus einem Bindemittel aufweisen. Die Anordnung dieser Bindemittelschicht trägt dazu bei, daß die äußere Schicht besser am Granulatkern bzw. Kern haftet, womit beispielsweise die Rieselfähigkeit des Granulats gesteigert wird.

Es hat sich als günstig erwiesen, wenn dieses Bindemittel in der weiteren Schicht ein Bindemittelgemisch aus verschiedenen, handelsüblichen Bindemitteln vom Ein- bzw. Zweikomponententyp ist. In einer besonderen Ausführungsform der vorliegenden Erfindung besteht das Bindemittelgemisch aus verschiedenen Polyurethanen. Je nach gewünschter Endverwendung des Granulats kann aber auch eine Schicht aus nur einem Bindemittel vorliegen.

Ein besonderer Vorteil ist die Umhüllung des Granulatkornes mit dem feuchtigkeitsspeichernden Faserfüllstoff in Verbindung mit der Bindemittelumhüllung. Mit der gespeicherten Feuchtigkeit kann ein bodennahes Klima erzeugt werden, das dem Naturrasen ähnelt. Der feuchtigkeitsspeichernde Faserfüllstoff kann z.B. aus Polyethylen-Fibrid mit 0,5 - 2,00 mm Faserlänge bestehen.

Erfindungsgemäß befindet sich in der äußeren Schicht des Granulats ein Polyethylen als Faserfüllstoffmaterial oder eine Mischung aus Polyethylen-Faserfüllstoffmaterial und einem mineralischen Material.

Das mineralische Material in der äußeren Schicht kann im Prinzip aus jedem mineralischen Material bestehen, das geeignet ist, den Kern des Granulats zu umhüllen. Dazu gehören beispielsweise Quarzsand oder ein Quarzmehl. Bevorzugt wird in der vorliegenden Erfindung Quarzmehl gewählt.

Die äußere Schicht des erfindungsgemäßen Granulats kann auf der ganzen Oberfläche des Kerns vorgesehen sein oder zumindest den größten Teil der ganzen Oberfläche des Kerns einnehmen. Bevorzugt weist diese äußere Schicht einen mittlere Dicke von 20 bis 120 µm auf, wobei ein Bereich für die mittlere Dicke von 40 bis 100 µm am meisten bevorzugt ist.

Das den Kern des erfindungsgemäßen Granulats bildende Gummimaterial kann im allgemeinen jedes Gummi- bzw. Kautschukmaterial sein. Es handelt sich hierbei bevorzugt um zerkleinerte Gummiabfälle und/oder ein Gummigranulat aus Neu- oder Altgummi. Bevorzugt wird ein Gummigranulat aus Recycling-Granulat mit einer Körnung von 0,2 bis 3,0 mm, vorzugsweise 0,5 - 2,5 mm verwendet.

Das Gummimaterial, im Idealfall das einzelne Gummikorn, liegt praktisch umhüllt mit einer Schicht aus dem Bindemittel und dem Faserfüllstoff-Material oder der Mischung aus dem Faserfüllstoffmaterial und einem mineralischen Material vor. Als Mineralstoff kann jedes teilchenförmige Material in Frage kommen. Besonders vorteilhaft sind Materialien, wie z.B. Quarzmehl.

Ebenfalls abhängig von der späteren Verwendung des erfindungsgemäßen Granulats kann ein Farbpigment zugemischt sein. Beispielsweise wird ein handelsübliches, grünes Farbpigment verwendet, wenn das Granulat in einen Kunstrasen eingestreut werden soll. Es ist selbstverständlich, daß jede Farbvariante möglich ist.

Die erfindungsgemäßen Granulate zeichnen sich durch eine ausgezeichnete Rieselfähigkeit aus. Die äußere Schicht mit einem mineralischen Material trägt zu einer Erhöhung des Schüttgewichts und damit zu einer standfesteren Einbindung in die damit zu verfüllende Fläche bei. Im Fall eines Kunstrasenfasersystems ergibt sich damit eine günstigere Ballreflexion mit weniger Verwehungen und Verwerfung durch den Spielbetrieb des locker liegenden Granulates.

Ein weiterer Vorteil des erfindungsgemäßen Granulats liegt darin, dass die Geruchsbelästigung, die bei Einstreugranulaten von Altreifen immer ein Problem darstellt, weitgehend unterbunden ist. Selbst bei hohen Temperaturen und starker Sonneneinstrahlung bleiben unangenehme Gerüche/Dämpfe aus, so dass die Flächen ohne Beeinträchtigung der Gesundheit begangen bzw. bespielt werden können.

Das erfindungsgemäße Granulat kann nach verschiedenen Verfahren hergestellt werden. Das nachfolgend beschriebene Verfahren ist ein Beispiel für die Herstellung des erfindungsgemäßen Granulats.

Im ersten Schritt des erfindungsgemäßen Verfahrens werden ein zerkleinertes Gummimaterial und ein Polyurethan-Bindemittel in einer Mischvorrichtung für einen Zeitraum von 1 bis 10 Minuten, bevorzugt 2 bis 4 Minuten, vermischt. Die genannten Komponenten werden zusammen in die Mischvorrichtung eingegeben, wo sie während des Vermischens als lose Mischung vorliegen. Gegebenenfalls kann noch eine Farbpaste mit dem entsprechenden Farbpigment hinzugegeben werden. In diesem Arbeitsgang wird das zerkleinerte Gummimaterial mit dem Bindemittel umhüllt.

Die Mischvorrichtung kann jede geeignete Vorrichtung sein, mit der die angegebenen Komponenten innig vermischt werden können. Als besonders vorteilhaft hat sich ein Zykloszwangsmischer erwiesen, da er die Komponenten des Granulats intensiv bewegen kann. Es kann aber auch eine Rührvorrichtung in Frage kommen oder auch eine Mischvorrichtung, mit der durch Verwirbeln der Komponenten eine Vermischung erreicht wird.

Im nächsten Arbeitsgang, dem zweiten Schritt des erfindungsgemäßen Verfahrens, wird ein Polyethylen-Faserfüllstoffmaterial oder eine Mischung aus einem Polyethylen-Faserfüllstoffmaterial und einem mineralischen Material hinzugegeben, wobei für weitere 1 bis 10 Minuten, bevorzugt 3 bis 8 Minuten, gemischt wird. Falls notwendig, sollte noch ein Katalysator hinzugegeben werden. In diesem Schritt bildet sich die äußere Schicht aus dem mineralischen Material.

Im dritten Schritt des Verfahrens wird das Polyurethan-Bindemittel unter weiterem Mischen für einen Zeitraum von 4 bis 20 Minuten, bevorzugt 10 bis 12 Minuten, abgebunden. Bei der Verwendung eines I-K Polyurethan-Bindemittels, wird Wasser zum Abbinden verwendet. Bei einem Bindemittel-Mehrkomponentensystem erfolgt die Abbindung durch intensives Mischen der Komponenten.

Im letzten Schritt des erfindungsgemäßen Verfahrens, d.h. im vierten Schritt, wird das Granulat nach Beendigung des Vermischens aus der Mischvorrichtung entfernt.

Nach Bedarf können die nach dem erfindungsgemäßen Verfahren hergestellten Granulate noch 1 bis 5 Tage, bevorzugt 2 bis 4 Tage, insbesondere 1 bis 2 Tage an der Luft liegengelassen werden, um sie nachtrocknen zu lassen.

Das erfindungsgemäße Verfahren ist apparativ einfach und kostengünstig durchzuführen. Die Herstellung des Granulats erfolgt, obwohl ein mehrstufiger Prozess vorliegt, in ein und derselben Mischvorrichtung. Der Mischvorgang verläuft kontinuierlich bis zum fertigen Produkt. Das Endprodukt ist nach Entfernung aus dem Mischer zu verwenden, d.h. es sind keine weiteren Schritte, bspw. für eine Reinigung, vorgesehen.

Die nach dem erfindungsgemäßen Verfahren hergestellten rieselfähigen Granulate erweisen sich als aufgezeichnete Füllstoffe für Kunststoffrasenflächen, die lose vorliegen und ohne weiteres als ein Streugranulat mit ausgezeichneten Rieseleigenschaften verwendet werden können. Durch die Umhüllung mit dem Polyethylen-Faserfüllstoff oder einer Mischung aus dem Polyethylen-Faserfüllstoff und einem mineralischen Material wird eine höhere Verträglichkeit zu den verschiedenen Kunstrasenfaser-Qualitäten gewährleistet. Der Abrieb einer Einfärbung, falls vorhanden, wird durch die Umhüllung deutlich herabgesetzt.

Durch die Verhaftung des Gummimaterialkerns mit der äußeren Schicht kommt es zu einer besseren Verzahnung der Körnchen miteinander im Vergleich zu Granulaten mit glatter Oberfläche. Das lose eingebrachte Füllmaterial wird durch den Spielbetrieb zum Teil stark aufgewühlt und kann durch Windeinwirkung verweht werden. Durch die Umhüllung des Gummikörnchens wird dieser Nachteil erheblich gemindert.

Es ist nach einer besonderen Ausführungsform des erfindungsgemäßen Verfahrens möglich, die Haftung der äußeren Schicht an den Gummimaterialkern dadurch zu verbessern, daß vor der Zugabe des Polyethylen-Faserfüllstoffes oder der Mischung aus dem Polyethylen-Faserfüllstoff und einem mineralischen Material unter Mischen ein Bindemittel aufgetragen wird. Mit dieser Maßnahme wird um den Gummimaterialkern eine weitere Ummantelung mit einem Polyurethan-Bindemittel vorgenommen. In der Regel reicht es aus, wenn für die Bildung dieser Bindemittel-Zwischenschicht für einen Zeitraum von 1 bis 10 Minuten weiter vermischt wird. Das Bindemittel kann das gleiche sein, das beim ersten Mischgang verwendet wurde. In einer bevorzugten Ausführungsform des erfindungsgemäßen Verfahrens wird ein Polyurethan-Bindemittel oder ein Gemisch aus verschiedenen Polyurethanen eingesetzt.

Es hat sich als besonders vorteilhaft erwiesen, wenn im erfindungsgemäßen Verfahren auf 100 Gew.-teile Gummimaterial 1 bis 20 Gew.-teile Bindemittel, 1 bis 30 Gew.-teile mineralisches Material und 1 bis 6 Gew.-teile Faserfüllstoff eingesetzt werden.

Wie bereits zuvor ausgeführt worden ist, kann es sich bei dem Gummimaterial um beispielsweise ein Altgummimaterial handeln. Besonders bevorzugt wird ein Recycling-Granulat der Körnung 0,5 bis 2,5 mm aus Altreifen bzw. technischen Gummiabfällen verwendet.

Das eingesetzte mineralische Material kann jedes geeignete mineralische Material sein, wobei das eingangs genannte Quarzmehl bevorzugt ist.

In einer bevorzugten Ausführungsform der Erfindung ist das Faserfüllstoff-Material ein Polyethylen mit einer Faserlänge von 0,5 bis 2,0 mm.

Im erfindungsgemäßen Verfahren wird das mineralische Material bevorzugt in einer Menge von 1 bis 30 Gew.-teilen auf 100 Gew.-teile des Gemischs aus dem mineralischen Material und dem Gummimaterial eingesetzt. Es sind Korngrößen von 3 bis 80 µm bevorzugt.

In der Regel können die einzelnen Rührschritte bei Raumtemperatur durchgeführt werden.

In einer Ausführungsform des erfindungsgemäßen Verfahrens können die Mischzeiten zum Teil wesentlich abgekürzt werden, wenn nach der Wasserzugabe bereits hergestelltes fertiges Einstreugranulat hinzugegeben wird. Das Gewichtsverhältnis Mischansatz zu fertigem Einstreugranulat kann in einem Bereich von 98:2 liegen. Das Einstreugranulat kann bevorzugt mindestens einen Tag abgelagert sein. Die Mischdauer ist nur kurz, sie liegt im Bereich von 0,5 bis 2,0 Minuten.

Die Analyse des erfindungsgemäßen Granulats hat ergeben, daß der Schwermetallgehalt außerordentlich niedrig ist, sogar zum Teil unterhalb der Nachweisgrenze liegt. So ist beispielsweise festgestellt worden, daß der Zinkgehalt deutlich abgesunken ist.

Es hat sich des weiteren herausgestellt, daß bei dem erfindungsgemäßen Granulat die Auslaugung von toxischen Vulkanisationsbeschleunigem, die in dem Gummimaterial enthalten sind, effektiv verhindert wird. Das erfindungsgemäße Granulat ist daher als völlig untoxisch einzustufen.

Das folgende Beispiel dient zur weiteren Erläuterung der vorliegenden Erfindung.

### Beispiel

In einem Zyklosmischer ZK 250 AE (Zyklos Mischtechnik GmbH) werden 195 kg Altgummigranulat mit einer Körnung von 0,5 - 2,5 mm und 14 kg eines Polyurethan-Bindemittels mit Farbpaste (Mischungsverhältnis Bindemittel: Farbpaste = 12:10) (Voramer MR 1045 Isocyanate, Dow Deutschland GmbH & Co. KG; Vakoplast-P Oxidgrün, Arichemie) gegeben und für etwa 2,0 Minuten mit 60 Umdrehungen pro Minute gerührt. Anschließend werden ein Bindemittelgemisch (Desmodur E15, Desmodur E23, Bayer AG und Voramer MR 1045 Isocyanate, Dow Deutschland GmbH & Co. KD) und Katalysator (Beschleuniger 10, Conica Technik AG Degussa)in die bewegte Mischung eingegeben und für weitere ca. zwei Minuten gerührt. Anschließend versetzt man die Mischung mit 3kg Polyethylen-Faserfüllstoff mit 0,5 - 2,0 mm Faserlänge und rührt für weitere fünf Minuten. Dann werden in die gerührte Mischung 600g Wasser hinzugegeben, wonach dann fünf Minuten weiter gerührt wird. Das Produkt liegt im abgebundenen Zustand als rieselfähiger, loser Füllstoff vor.

Nach Herausnehmen aus dem Mischer kann das beschichtete Granulat nach Bedarf noch etwa 1 bis 2 Tage an der Luft liegengelassen werden.

## Patentansprüche

1. Rieselfähiges Granulat, das als Kern ein zerkleinertes Gummimaterial und eine äußere Schicht aus einem Bindemittel und einem Material, das aus einem Faserfüllstoffmaterial oder einer Mischung aus einem Faserfüllstoffmaterial und einem mineralischen Material gewählt ist, umfasst, wobei das Bindemittel ein Polyurethan-Bindemittel und das Faserfiillstoffmaterial Polyethylen ist.

2. Granulat nach Anspruch 1, **dadurch gekennzeichnet, dass** sich auf der äußeren Schicht eine weitere Schicht aus einem Bindemittel befindet.

3. Granulat nach Anspruch 1 oder 2, **dadurch gekennzeichnet, dass** das mineralische Material in der äußeren Schicht ein Gesteinsmehl ist.

4. Granulat nach mindestens einem der Ansprüche 1 bis 3, **dadurch gekennzeichnet, dass** die äußere Schicht eine mittlere Dicke von 20 bis 120 µm aufweist.

5. Granulat nach mindestens einem der Ansprüche 1 bis 4, **dadurch gekennzeichnet, dass** das Gummimaterial ein Altgummimaterial ist.

6. Granulat nach mindestens einem der Ansprüche 2 bis 5, **dadurch gekennzeichnet, dass** das Bindemittel in der weiteren Schicht ein Bindemittelgemisch aus verschiedenen Polyurethanen ist.

7. Granulat nach mindestens einem der Ansprüche 1 bis 6, **dadurch gekennzeichnet, dass** es ein Farbpigment enthält.

8. Granulat nach Anspruch 7, **dadurch gekennzeichnet, dass** das Farbpigment ein grünes Farbpigment ist.

9. Verfahren zur Herstellung eines rieselfähigen Granulats nach mindestens einem der vorangegangenen Ansprüche, mit den Schritten:
(i) Vermischen eines zerkleinerten Gummimaterials und eines Polyurethan-Bindemittels in einer Mischvorrichtung für einen Zeitraum von 1 bis 10 Minuten;
(ii) Zugabe eines Polyethylen-Faserfüllstoffmaterials oder einer Mischung aus einem Polyethylen-Faserfüllstoffmaterial und einem mineralischem Material unter weiterem Mischen für einen Zeitraum von 1 bis 10 Minuten;
(iii) Abbinden des Polyurethan-Bindemittels unter Mischen für einen Zeitraum von 4 bis 20 Minuten und
(iv) Entfernen des Granulats aus der Mischvorrichtung.

10. Verfahren nach Anspruch 9, **dadurch gekennzeichnet, dass** vor der Zugabe des Polyethylen-Faserfüllstoffmaterials oder einer Mischung aus einem Polyethylen-Faserfüllstoffmaterial und einem mineralischem Material unter Mischen ein Polyurethan-Bindemittel für einen Zeitraum von 1 bis 10 Minuten hinzugegeben wird.

11. Verfahren nach Anspruch 9 oder 10, **dadurch gekennzeichnet, dass** im ersten Schritt für einen Zeitraum im Bereich von 2 bis 4 Minuten vermischt wird.

12. Verfahren nach mindestens einem der Ansprüche 9 bis 11, **dadurch gekennzeichnet, dass** unter Zugabe des Polyethylen-Faserfüllstoffmaterials oder der Mischung aus einem Polyethylen-Faserfüllstoffmaterial und einem mineralischen Material für 3 bis 8 Minuten weiter gerührt wird.

13. Verfahren nach mindestens einem der Ansprüche 9 bis 12, **dadurch gekennzeichnet, dass** das Abbinden für einen Zeitraum von 10 bis 12 Minuten durchgeführt wird.

14. Verfahren nach mindestens einem der Ansprüche 9 bis 13, **dadurch gekennzeichnet, dass** das Granulat nach dem Entfernen aus der Mischvorrichtung 1 bis 5 Tage an der Luft liegen gelassen wird.

15. Verfahren nach Anspruch 14, **dadurch gekennzeichnet, dass** das Granulat 2 bis 4 Tage liegen gelassen wird.

16. Verfahren nach mindestens einem der Ansprüche 9 bis 15, **dadurch gekennzeichnet, dass** im zweiten Schritt (ii) das Polyethylen-Faserfüllstoffmaterial oder eine Mischung aus einem Polyethylen-Faserfüllstoffmaterial und einem mineralischen Material in einer Menge von 1 bis 30 Gew.-teilen auf 100 Gew.-teile des Gemischs aus Polyethylen-Faserfüllstoffmaterial oder einer Mischung aus Polyethylen-Faserfüllstoffmaterial und einem mineralischen Material und dem Gummimaterial eingesetzt wird.

17. Verwendung des Granulats nach mindestens einem der Ansprüche 1 bis 8 oder des nach einem der Ansprüche 9 bis 16 hergestellten rieselfähigen Granulats als Einstreumaterial für Kunstrasen, Sporteinrichtungen und Spielplätze.

## Claims

1. Free-flowing granulated material which comprises as a core a comminuted rubber material and an outer layer consisting of a binding agent and a material that is selected from a fibre filler material or a mixture of a fibre filler material and a mineral material, wherein the binding agent is a polyurethane binding agent and the fibre filler material is polyethylene.

2. Granulated material according to claim 1, **characterised in that** a further layer consisting of a binding agent is found on the outer layer.

3. Granulated material according to claim 1 or 2, **characterised in that** the mineral material in the outer layer is a stone powder.

4. Granulated material according to at least one of claims 1 to 3, **characterised in that** the outer layer has an average thickness of 20 to 120 µm.

5. Granulated material according to at least one of claims 1 to 4, **characterised in that** the rubber material is a used rubber material.

6. Granulated material according to at least one of claims 2 to 5, **characterised in that** the binding agent in the further layer is a binding-agent mix of various polyurethanes.

7. Granulated material according to at least one of claims 1 to 6, **characterised in that** it contains a coloured pigment.

8. Granulated material according to claim 7, **characterised in that** the coloured pigment is a green coloured pigment.

9. Method for producing a free-flowing granulated material according to at least one of the preceding claims, having the steps:
(i) mixing of a comminuted rubber material and a polyurethane binding agent in a mixing arrangement for a period of 1 to 10 minutes;
(ii) addition of a polyethylene fibre filler material or a mixture of a polyethylene fibre filler material and a mineral material with further mixing for a period of 1 to 10 minutes;
(iii) setting of the polyurethane binding agent whilst mixing for a period of 4 to 20 minutes; and
(iv) removal of the granulated material from the mixing arrangement.

10. Method according to claim 9, **characterised in that** before the addition of the polyethylene fibre filler material or a mixture of a polyethylene fibre filler material and a mineral material whilst mixing a polyurethane binding agent is added for a period of 1 to 10 minutes.

11. Method according to claim 9 or 10, **characterised in that** in the first step mixing is carried out for a period in the range of 2 to 4 minutes.

12. Method according to at least one of claims 9 to 11, **characterised in that** whilst adding the polyethylene fibre filler material or the mixture of a polyethylene fibre filler material and a mineral material there is further stirring for 3 to 8 minutes.

13. Method according to at least one of claims 9 to 12, **characterised in that** the setting is effected for a period of 10 to 12 minutes.

14. Method according to at least one of claims 9 to 13, **characterised in that** the granulated material, after removal from the mixing arrangement, is left to lie in the air for 1 to 5 days.

15. Method according to claim 14, **characterised in that** the granulated material is left to lie for 2 to 4 days.

16. Method according to at least one of claims 9 to 15, **characterised in that** in the second step (ii) the polyethylene fibre filler material or a mixture of a polyethylene fibre filler material and a mineral material is used in a quantity of 1 to 30 parts by weight to 100 parts by weight of the mix of polyethylene fibre filler material or a mixture of polyethylene fibre filler material and a mineral material and the rubber material.

17. Use of the granulated material according to at least one of claims 1 to 8 or of the free-flowing granulated material produced according to one of claims 9 to 16 as a strewable material for artificial turf, sports facilities and playgrounds.

## Revendications

1. Granulat fluide doté d'un noyau en matériau caoutchouteux broyé et d'une couche extérieure constituée d'un liant et d'un matériau qui est, au choix, un matériau de charge fibreux ou un mélange d'un matériau de charge fibreux et d'un matériau minéral, le liant étant un liant polyuréthane et le matériau de charge fibreux étant du polyéthylène.

2. Granulat selon la revendication 1, **caractérisé en ce qu'**une couche supplémentaire de liant se trouve sur la couche extérieure.

3. Granulat selon la revendication 1 ou 2, **caractérisé en ce que** le matériau minéral de la couche extérieure est une roche réduite en poudre.

4. Granulat selon au moins l'une des revendications 1 à 3, **caractérisé en ce que** la couche extérieure a une épaisseur moyenne de 20 à 120 µm.

5. Granulat selon au moins l'une des revendications 1 à 4, **caractérisé en ce que** le matériau caoutchouteux est un caoutchouc de récupération.

6. Granulat selon au moins l'une des revendications 2 à 5, **caractérisé en ce que** le liant de la couche supplémentaire est un mélange de liant constitué de différents polyuréthanes.

7. Granulat selon au moins l'une des revendications 1 à 6, **caractérisé en ce qu'**il contient un pigment coloré.

8. Granulat selon la revendication 7, **caractérisé en ce que** le pigment coloré est un pigment coloré vert.

9. Procédé de fabrication d'un granulat fluide selon au moins l'une des revendications précédentes, ledit procédé comportant les étapes :
(i) de mélange d'un matériau caoutchouteux broyé et d'un liant polyuréthane dans un mélangeur pendant un laps de temps de 1 à 10 minutes ;
(ii) d'addition d'un matériau de charge fibreux en polyéthylène ou d'un mélange d'un matériau de charge fibreux en polyéthylène et d'un matériau minéral en effectuant un mélange supplémentaire pendant un laps de temps de 1 à 10 minutes;
(iii) de prise du liant polyuréthane en mélangeant pendant un laps de temps de 4 à 20 minutes et
(iv) de retrait du granulat du mélangeur.

10. Procédé selon la revendication 9, **caractérisé en ce que**, avant l'addition du matériau de charge fibreux en polyéthylène ou du mélange de matériau de charge fibreux en polyéthylène et d'un matériau minéral, on ajoute un liant polyuréthane en mélangeant pendant un laps de temps de 1 à 10 minutes.

11. Procédé selon la revendication 9 ou 10, **caractérisé en ce que**, dans la première étape, le mélange est effectué pendant un laps de temps de l'ordre de 2 à 4 minutes.

12. Procédé selon au moins l'une des revendications 9 à 11, **caractérisé en ce que**, en ajoutant le matériau de charge fibreux en polyéthylène ou le mélange d'un matériau de charge fibreux en polyéthylène et d'un matériau minéral, on continue d'agiter pendant 3 à 8 minutes.

13. Procédé selon au moins l'une des revendications 9 à 12, **caractérisé en ce que** la prise est réalisée pendant un laps de temps de 10 à 12 minutes.

14. Procédé selon au moins l'une des revendications 9 à 13, **caractérisé en ce que** le granulat est laissé 1 à 5 jours à l'air libre après sortie du mélangeur.

15. Procédé selon la revendication 14, **caractérisé en ce que** le granulat est laissé 2 à 4 jours.

16. Procédé selon au moins l'une des revendications 9 à 15, **caractérisé en ce que**, à la deuxième étape (ii), le matériau de charge fibreux en polyéthylène ou un mélange d'un matériau de charge fibreux en polyéthylène et d'un matériau minéral est employé dans une quantité de 1 à 30 parties en poids pour 100 parties en poids du mélange de matériau de charge fibreux en polyéthylène ou d'un mélange de matériau de charge fibreux en polyéthylène et d'un matériau minéral et du matériau caoutchouteux.

17. Utilisation du granulat selon au moins l'une des revendications 1 à 8 ou du granulat fluide fabriqué selon l'une des revendications 9 à 16 comme matériau à répandre pour gazon artificiel, installations sportives ou aires de jeu.
